# EUROPEAN PATENT APPLICATION

(11) **EP 2 014 617 A2**
(43) Date of publication of application: **14.01.2009**
(21) Application number: 08157790.0
(22) Date of filing: 06.06.2008
(51) Int. Cl.: C01B 33/02

(54) **Process For Melting Silicon Powders**

(30) Priority: 15.06.2007 US 763806
(71) Applicant: GENERAL ELECTRIC COMPANY, Schenectady, NY 12345 (US)
(72) Inventor: Jonczyk, Ralf, Wilmington, DE 19808 (US); Rand, James, Landenberg, PA 19350 (US); Lou, Victor Lienkong, Niskayuna, NY 12309 (US)
(74) Representative: Szary, Anne Catherine

(57) **Abstract**

A process for melting powders of a semiconductor material, such as silicon, to yield a high-purity solid product. The process generally entails introducing the powder into an elevated end of a tube inclined from horizontal and, while maintaining an inert atmosphere within the tube, rotating the tube so as to agitate and cause the powder therein to flow toward an oppositely-disposed lower end of the tube while heating the tube so that the powder melts as it flows toward the lower end of the tube. The molten material is then allowed to flow freely from the lower end of the tube and subsequently solidify to form a product.

## Description

### BACKGROUND OF THE INVENTION

The present invention generally relates to processes and equipment for processing materials. More particularly, this invention relates to a process for continuous melting of high-purity silicon powders to yield high-purity silicon products.

High-purity solar grade silicon (SoG-Si) feedstock can be produced as very fine particles with the necessary purity (e.g., purity levels of at least 99.99%, for example 99.9999%) by nucleating a gas such as silane (SiH₄) in a free-space reactor. The resulting silicon particles (fines) typically range in size from submicron to about twenty micrometers. The production of silicon granules, ingots, and other larger products from silicon fines requires melting the fines in an atmosphere that does not contain contaminants or air, the latter of which will result in the surfaces of the products being heavily contaminated with silica (SiO₂) and carbon. One such approach is to melt silicon fines in a crucible, an example of which is U.S. Patent No. 4,354,987. However, containment of silicon fines in a crucible is complicated by their low density and very low weight, resulting in the loss of fines during and after placement in the crucible. To overcome these problems, silicon fines can be compacted, for example, as disclosed in W02005118272. However, at least when using conventional compaction processes, the resulting billets are not very stable because high purity requirements prohibit the use of binders, resulting in significant shedding of fines when the billets are handled.

While high purity silicon can be produced from other feedstock, fine silicon powders produced in fluidized bed reactors, free-space reactors, etc., are widely available and relatively inexpensive, thus making them desirable for producing solar grade silicon at relatively low cost. Therefore, it would be desirable if improved methods were available for melting silicon fines more efficiently than existing processes without compromising purity.

### BRIEF SUMMARY OF THE INVENTION

The present invention provides a process for melting powders of a semiconductor material, such as silicon, to yield a high-purity solid product.

The process generally entails introducing the powder into an elevated end of a tube inclined from horizontal and, while maintaining an inert atmosphere within the tube, rotating the tube so as to agitate and cause the powder therein to flow toward an oppositely-disposed lower end of the tube while heating the tube so that particles of the powder melt as the powder flows toward the lower end of the tube. The molten material is then allowed to flow freely from the lower end of the tube and subsequently solidify to form a product.

A significant advantage of this invention is that silicon (and other semiconductor) powders, including very fine silicon powders (fines), can be melted without prior compaction. In practice, the process has also been shown to yield a product with very low contamination levels, and particularly low levels of oxygen, carbon, and volatiles. While not wishing to be held to any particular theories, it is believed that oxygen, carbon, and volatile contaminants that might be present on the surfaces of the powder can be more readily removed due to the large surface area and mechanical agitation of the rotating tube, and process byproducts, particularly silicon monoxide, can be more effectively removed due to the open design of the tube as compared to conventional crucibles used in crucible melting processes. It is further believed that silicon powders can be melted at lower temperature than possible with crucible processes due to the removal of oxygen, carbon, and other potential volatile contaminants from the powder particles prior to and during melting. Because the rotating tube presents a relatively large surface area to a heat source and more efficiently couples the thermal energy of the heat source to the silicon powder in comparison to a conventional crucible, it is also believed that the process of this invention is capable of higher throughput and can be more readily scaled up to process large volumes of silicon powder in comparison to crucible processes. Though powders made up of silicon fines have a very low bulk density, the relatively large interior volume of the tube promotes separation of the resulting molten silicon from the fines, such that floating fines and slag are substantially absent in the molten silicon.

Other objects and advantages of this invention will be better appreciated from the following detailed description.

### BRIEF DESCRIPTION OF THE DRAWINGS

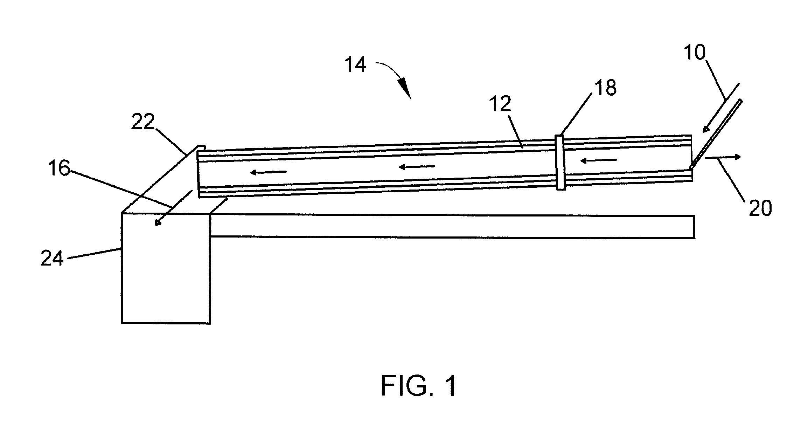

Figure 1 schematically represents a cross-sectional view of a rotary kiln for use in processing high-purity silicon powders in accordance with this invention.

### DETAILED DESCRIPTION OF THE INVENTION

The present invention provides a process for melting high-purity silicon powders that minimizes losses and minimizes contamination of the melt and the resulting solidified product. The silicon powder can be generated by various processes, such as nucleation of silane gas to yield particle sizes in a range of less than a micrometer to about twenty micrometers, though the processing of smaller and larger sizes is also possible, including particles in ranges of, for example, less than 0.01 micrometer to 1 micrometer, 1 micrometer to 20 micrometers, 20 micrometers to 200 micrometers, and 200 micrometers to about 2 mm or more, and any combinations of these ranges. As such, the present invention can be advantageously used with very fine silicon particles (fines) that are otherwise difficult to handle and melt in a conventional crucible. Such fines can be produced in a fluidized bed, free-space reactor, or another process. Production methods for silicon powders and fines are well known and do not form a part of this invention, and therefore will not be discussed in any detail here.

As schematically represented in Figure 1, the process generally entails loading a silicon powder 10 directly into an elevated end of a rotating tube 12 within a rotary kiln 14, and heating the tube 12 to a temperature above the melting point (about 1410°C) of silicon, preferably at least 1450°C. Suitable materials for the tube 12 include graphite and silicon carbide having an internal quartz lining, though the use of other materials that are nonreactive with silicon is also possible. The powder 10 travels down the slightly sloped rotating tube 12 and, as they do so, melt once they reach the melting temperature of silicon within the tube 12. The molten silicon 16 is then free to continue flowing downward through the tube 12 before exiting the lower end of the tube 12. At least those sections of the tube 12 containing the molten silicon 16 and containing the silicon powder 10 at elevated temperatures also contain an inert atmosphere, such as helium or argon, to prevent oxidation, nitriding, and other contamination.

The molten silicon 16 flows more readily within the tube 12 than the powder 10, and as a result accelerates through the tube 12 before exiting, at which point the molten silicon 16 may be discharged into suitable post-melting processing equipment 24, such as a conventional crucible, granulation apparatus, or other apparatus within which the molten silicon 16 can be resolidified in a desired form, such as granules, ingots, etc. Such equipment and various processes that can be performed on the silicon products they produce, including crystallization processes, are well known and do not form a part of this invention, and therefore will not be discussed in any detail here.

Due to the open design of the tube 12 and the separation between the molten silicon 16 and powder 10 within the tube 12, before and during melting the powder 10 is able to efficiently off-gas any oxygen and carbon that might be present as a result of, for example, prior exposure to air. Because contaminants can be removed from individual powder particles in this manner before and during melting of the particles, and possibly also as a result of agitation and contact between the tube 12 and most powder particles within the tube 12, it is believed the powder 10 can be fully melted with the tube 12 heated to a temperature significantly lower than that required for conventional crucible processes, which may further reduce contamination of the molten silicon 16. For powders 10 not containing any appreciable amounts of surface oxygen and carbon, such powders 10 may pick up a very small amount (e.g., about 10ppmw) of oxygen from the tube 12 if formed of quartz.

Rotary kilns suitable for use with the process of this invention are well known for the purpose of heating materials to high temperatures in a continuous process. Materials typically processed using rotary kilns include cement, lime, refractories, metakaolin, titania, alumina, vermiculite, etc. As shown in Figure 1, and as with known rotary kilns, the kiln 14 is inclined slightly to the horizontal while rotated slowly about its axis, such as through a drive gear 18 on the exterior of the kiln 14. The silicon powder 10 fed into the elevated end of the tube 12 gradually travels down toward the lower end of the tube 12, during which time the powder 10 is agitated by the rotation of the tube 12. Heating of the tube 12 can be achieved by various known methods, such as resistive or inductive heating of the tube, or passing hot gases through the tube 12 and/or over the exterior of the tube 12 or kiln 14. Hot gases may be generated in any suitable manner that does not interfere with the desired inert atmosphere for the molten silicon 16. Waste gases 20 generated by the melting process and any hot gases used in the melting process can be ducted away at the elevated end of the tube 12. An exit hood 22 located at the exit to the lower end of the tube 12 collects and routes the molten silicon 16 to the desired post-melting processing equipment 24.

In investigations leading up to this invention, the quality of silicon produced using the process described above was very good with less than expected oxygen and carbon present. The process was performed in a rotary kiln furnace using a silicon carbide tube with a quartz lining. The kiln was inclined about 0.5 degree to horizontal, rotated at a rate of about 2 rpm, and heated by resistance heating to a temperature of about 1450°C. The silicon powder readily melted as a result of good thermal contact and agitation with the tube. For this investigation, the molten silicon was not discharged from the tube, but instead extracted from the tube after the rotary kiln was allowed to cool down. The resulting silicon product was analyzed and found to contain only 11 ppmw carbon and 6 ppmw oxygen, though the original silicon powder contained 85 ppmw carbon and 2250 ppmw oxygen. As such, the low levels of oxygen and carbon contamination found in the product were within acceptable ranges (generally about 10 to about 20 ppmw) for SoG silicon. It was believed that less oxygen and carbon was present than typically encountered with conventional crucible processes because the powder was melted within the tube at a significantly lower temperature than typically required for conventional crucible processes.

From the above, it can be appreciated that the process of this invention enables high-purity silicon (or other semiconductor) products, including solar grade silicon with purity levels of at least 99.99%, to be readily produced from silicon (or other semiconductor) powders that are melted without requiring prior compaction of the powders. Furthermore, it appears that oxygen, carbon, and other potential volatile contaminants that might be present within the powder particles are more readily removed due to the large surface area and mechanical agitation of the rotating tube 12, and process byproducts can be more effectively removed due to the open design of the tube 12 as compared to conventional crucibles used in crucible melting processes. It also appears that silicon powders 10 can be melted at lower temperatures than possible with crucible processes due to the removal of oxygen, carbon, and other potential surface contaminants from the surfaces of the powders prior to melting. Because the rotating tube 12 presents a relatively large surface area to a heat source and efficiently couples the thermal energy of the heat source to the silicon powders 10 in comparison to a conventional crucible, it is also believed that the process of this invention is capable of higher throughput and can be more readily scaled up to process large volumes of silicon powders in comparison to crucible processes. Though powders made up of silicon fines have a very low bulk density, the relatively large interior volume of the tube 12 promotes separation of the resulting molten silicon 16 from the fines, such that floating fines and slag are substantially absent in the molten silicon 16.

Finally, it should be noted that metallic impurity levels within the products will be determined in large part by the initial quality of the powder 10, in that the process does not add any appreciable amounts of metallic impurities. Otherwise, the process of this invention can reduce oxygen and carbon levels in powders 10 that were previously exposed to air, and may add only very small amounts (e.g., up to 10 ppmw) of oxygen to powders 10 that were originally substantially free of oxygen as a result of not being previously exposed to air.

While the invention has been described in terms of a particular embodiment, it is apparent that other forms could be adopted by one skilled in the art. For example, the physical configuration of the rotary kiln 14 and tube 12 could differ from that shown. Furthermore, while only the processing of silicon is discussed, other semiconductor materials having suitable properties for use in solar and other applications requiring high purity materials could also be processed in accordance with the invention. Finally, it should be noted that the drawings are not necessarily to scale, but instead are drawn for purposes of clarity when viewed in combination with the above description. Therefore, the scope of the invention is to be limited only by the following claims.

## Claims

1. A process for melting powders (10) of a semiconductor material, the process comprising:
introducing a powder (10) of a semiconductor material into a tube (12) inclined from horizontal so as to have an elevated end and an oppositely-disposed lower end, the powder (10) being introduced into the tube (12) through the elevated end of the tube (12);
while maintaining an inert atmosphere within the tube (12), rotating the tube (12) so as to agitate and cause the powder (10) therein to flow toward the lower end of the tube (12) while heating the tube (12) so that particles of the powder (10) melt to form a molten semiconductor material as the powder (10) flows toward the lower end of the tube (12); and
allowing the molten semiconductor material to flow freely from the lower end of the tube (12) and then solidify to form a product.

2. The process according to claim 1, wherein the semiconductor material comprises silicon.

3. The process according to claim 1 or claim 2, wherein the powder (10) has a particle size of less than 0.01 micrometer to 1 micrometer.

4. The process according to claim 1 or claim 2, wherein the powder (10) has a particle size of 1 micrometer to 20 micrometers.

5. The process according to claim 1 or claim 2, wherein the powder (10) has a particle size of 20 micrometers to 200 micrometers.

6. The process according to claim 1 or claim 2, wherein the powder (10) has a particle size of 200 micrometers to about 2 mm.

7. The process according to any preceding claim, wherein the particles of the powder (10) off-gas any oxygen, carbon, and/or volatile contaminants before and during melting.

8. The process according to any preceding claim, wherein the product contains less oxygen and carbon than the powder (10).

9. The process according to any preceding claim, wherein the product has a purity level of at least 99.99%.

10. A process for melting a silicon powder (10), the process comprising:
introducing a silicon powder (10) into a tube (12) inclined from horizontal so as to have an elevated end and an oppositely-disposed lower end, the silicon powder (10) having a particle size of less than one micrometer up to about twenty micrometers and being introduced into the tube (12) through the elevated end of the tube (12);
while maintaining an inert atmosphere within the tube (12), rotating the tube (12) so as to agitate and cause the silicon powder (10) therein to flow toward the lower end of the tube (12) while heating the tube (12) so that particles of the silicon powder (10) melt to form molten silicon as the powder (10) flows toward the lower end of the tube (12), the particles off-gassing any oxygen, carbon, and/or volatile contaminants before and during melting; and
allowing the molten silicon to flow freely from the lower end of the tube (12) and then solidify to form a silicon product, the silicon product containing less oxygen and carbon than the silicon powder (10) and having a purity level of at least 99.99%.
